# EUROPÄISCHE PATENTSCHRIFT

(11) **EP 2 819 870 B1**
(45) Veröffentlichungstag und Bekanntmachung des Hinweises auf die Patenterteilung: **25.04.2018**
(21) Anmeldenummer: 13706479.6
(22) Anmeldetag: 20.02.2013
(51) Int. Cl.: B60K 28/06, G08G 1/16, B60Q 1/14

(54) **VERFAHREN UND VORRICHTUNG ZUM FESTSTELLEN EINER BLENDUNG DES FAHRERS EINES FAHRZEUGES**
METHOD AND DEVICE FOR DETECTING DAZZLING OF THE DRIVER OF A VEHICLE
PROCÉDÉ ET DISPOSITIF PERMETTANT DE DÉTERMINER L'ÉBLOUISSEMENT DU CONDUCTEUR D'UN VÉHICULE

(30) Priorität: 01.03.2012 DE 102012203214
(43) Veröffentlichungstag der Anmeldung: 07.01.2015
(73) Patentinhaber: Continental Automotive GmbH, 30165 Hannover (DE)
(72) Erfinder: HAUBENSCHILD, Frank, 57234 Wilnsdorf (DE)
(86) Internationale Anmeldenummer: PCT/EP2013/053377
(87) Internationale Veröffentlichungsnummer: WO 2013/127674

(56) Entgegenhaltungen:
- WO-A1-95/04670
- DE-A1-102008 037 267
- US-A- 5 347 261
- US-A1- 2009 086 497

## Beschreibung

Die Erfindung betrifft ein Verfahren zum Feststellen einer Blendung des Fahrers eines ersten Fahrzeuges, die durch eine fehlerhaft eingestellte Leuchteinrichtung eines zweiten Fahrzeuges verursacht wird, wobei das Vorliegen einer Blendung durch einen optischen Lichtsensor festgestellt wird, sowie eine zur Durchführung dieses Verfahrens eingerichtete Vorrichtung.

Im Straßenverkehr kommt es häufig vor, dass Verkehrsteilnehmer durch die Leuchteinrichtung eines anderen Fahrzeugs, d. h. insbesondere dessen Scheinwerfer, geblendet werden. Bei dem anderen Fahrzeug kann es sich beispielsweise um ein entgegenkommendes oder um ein hinterherfahrendes Fahrzeug handeln. Die Blendung kann verschiedene Ursachen haben. So kann die Leuchteinrichtung kaputt sein, falsch eingestellt sein oder nicht sachgemäß verwendet werden. Eine fehlerhafte Einstellung ist häufig zu beobachten bei einer erhöhten Beladung des Fahrzeuges, beispielsweise durch schwere Gegenstände im Heck oder zusätzliche Personen. Durch die zusätzliche Last senkt sich das Heck des Fahrzeuges verstärkt ab, wodurch der Leuchtkegel des Lichtes - ohne eine entgegen gerichtete Einstellung der Leuchteinrichtung - von der Fahrbahn weg nach oben gelenkt wird. Dies führt zu einer verstärkten Lichtintensität im Kopfbereich der Verkehrsteilnehmer des ersten Fahrzeugs. Einen ähnlichen Effekt kann eine falsch justierte Leuchteinrichtung haben, die beispielsweise durch einen Unfall oder eine unsachgemäße Reparatur verstellt wurde.

Eine weitere Möglichkeit der Blendung besteht darin, dass der Fahrer eines Fahrzeuges das Fernlicht nicht der Situation angemessen verwendet. Das Fernlicht wird häufig in gegenverkehrsarmen Regionen, beispielsweise auf Landstraßen, verwendet, um die Fahrstrecke besser auszuleuchten und so die Sichtweite des Fahrers zu erhöhen. Es kommt aber immer wieder vor, dass der Fahrer eines Fahrzeuges vergisst, das Fernlicht auszuschalten, wenn sich Gegenverkehr nähert.

Unabhängig von der Ursache führt die erhöhte Lichtintensität zu einer Beeinträchtigung der anderen Verkehrsteilnehmer, eventuell zu einer Blendung, die die Sicht der anderen Verkehrsteilnehmer stark beeinträchtigt. Die erhöhte Lichtintensität bei einer derartigen Blendung führt insbesondere bei Dunkelheit dazu, dass die Augen des Fahrers die restliche, wesentlich dunklere Umgebung nicht mehr vollständig wahrnehmen können. Dadurch wird die Unfallgefahr erhöht.

Zur Vermeidung einer derartigen Beeinträchtigung durch Blendung des Verkehrs ist es bekannt, den Rückspiegel abblendbar auszugestalten. Hierbei wird die in das Gesichtsfeld des Fahrers reflektierte Lichtintensität verringert. Es sind auch stufenlos und gegebenenfalls sogar automatisch betriebene Abblendspiegel bekannt. Dabei wird jedoch nicht die Ursache der Blendung behoben, sondern nur versucht, deren Auswirkung auf den Fahrer durch Änderung der Reflektivität des Rückspiegels zu mindern. Nachteilig ist dabei auch, dass die reduzierte Reflektivität auch zu einer verringerten Sicht des Fahrers auf den übrigen Verkehrs führt. Ebenso ist diese Maßnahme lediglich bei einer Blendung durch den hinterherfahrenden Verkehr anwendbar. Bei einer Blendung durch entgegenkommende Fahrzeuge ist diese Maßnahme dagegen wirkungslos.

Eine weitere Möglichkeit, die Blendung zu beheben, kann darin bestehen, den gegenläufigen Verkehr durch ein optisches und/oder akustisches Warnsignal zu warnen. So kann der geblendete Fahrer beispielsweise durch Betätigen der Hupe den blendenden Fahrer akustisch warnen. Dies ist jedoch nicht sonderlich spezifisch. So realisiert der blendende Fahrer nicht notwendigerweise, dass die Ursache für die Warnung die durch sein Fahrzeug hervorgerufene Blendung des Gegenverkehrs ist. Ebenso kann der geblendete Fahrer zur Warnung selbst sein Fernlicht kurz betätigen.

Dies wird auch Lichthupe genannt, ist jedoch ebenfalls unspezifisch und auch gefährlich, da der Gegenverkehr ebenso geblendet wird. Daher kann es bei diesem eigentlich als Informationsübermittlung dienenden Weg zu einer erhöhten Unfallgefahr kommen. Die Druckschrift US 2009/086497 A1 offenbart ein Verfahren zum Feststellen einer Blendung des Fahrers eines ersten Fahrzeuges, das dem Oberbegriff des Anspruchs 1 entspricht. Aufgabe der vorliegenden Erfindung ist es daher, insbesondere den Gegenverkehr, grundsätzlich aber alle am Verkehr teilnehmenden Fahrzeuge, spezifisch über eine durch die hervorgerufene Blendung eines anderen Verkehrsteilnehmers zu informieren, so dass die Blendung behoben werden kann, ohne dass durch die Informationsübermittlung die anderen Verkehrsteilnehmer störend beeinflusst werden.
Hierzu schlägt die vorliegende Erfindung ein Verfahren mit den Merkmalen des Anspruchs 1 und eine Vorrichtung mit den Merkmalen des Anspruchs 6 vor. Es wird insbesondere vorgeschlagen, dass bei einer festgestellten Blendung eine Warnmeldung an das zweite Fahrzeug gesendet wird, wenn ein vorgegebenes Blendkriterium erfüllt ist. Dieses Verfahren ist sowohl einsetzbar bei einer Blendung durch ein entgegenkommendes als auch durch ein hinter dem ersten Fahrzeug herfahrendes Fahrzeug.
Durch diese aktive Kommunikation zwischen den verschiedenen Verkehrsteilnehmern werden der Fahrer und/oder das Fahrzeugassistenzsystem eines die Blendung auslösenden Fahrzeugs über die Blendung informiert. Daraufhin können der Fahrer und/oder das Fahrzeugassistenzsystem die fehlerhafte Leuchteinrichtung korrekt einstellen oder die Verwendung der Lichteinrichtung der Situation anpassen. Beispielsweise kann das Fahrzeugassistenzsystem in dem zweiten Fahrzeug eine automatische Korrektur durchführen. Dazu kann das Fernlicht je nach Situation deaktiviert werden oder es kann die Höheneinstellung der Leuchteinrichtung angepasst werden. Falls die Ursache der Blendung nicht behebbar ist, kann der Fahrer aufgrund der spezifischen Meldung zumindest die Leuchteinrichtung in der Werkstatt überprüfen lassen und so zukünftig eine Blendung vermeiden.

Falls mehrere solcher Mitteilungen erfolgt sind, kann in dem zweiten Fahrzeug eine statistische Bewertung der Warnmeldungen erfolgen. Somit kann eine zeitliche Häufung der Meldungen so gedeutet werden, dass diese nicht aufgrund eines fehlerhaften Detektors oder Sensors in dem vermeintlich geblendeten Fahrzeug ausgesandt wird, sondern dass tatsächlich eine Blendung vorliegt.
Es ist ferner sinnvoll, dass der die Lichtintensität erfassende Lichtsensor möglichst nah am Gesicht des Fahrers angeordnet ist. Dies kann beispielsweise erreicht werden, indem sich der Lichtsensor in dem Rückspiegel befindet. Das so durch den Lichtsensor erfasste Licht tritt aufgrund der großen räumlichen Nähe mit hoher Wahrscheinlichkeit auch in das Gesichtsfeld des Fahrers ein. Hierdurch wird sichergestellt, dass das durch den Lichtsensor detektierte Licht den Fahrer mit zumindest hoher Wahrscheinlich auch blendet. Gemäß der Erfindung wird es vorgesehen, dass als Blendkriterium mindestens ein Schwellenwert für Lichtintensität und/oder für die Dauer der vorgegebenen Lichtintensität vorgegeben wird, die insbesondere durch den Lichtsensor detektiert wird. Durch den Schwellenwert für die Lichtintensität wird erreicht, dass eine Warnmeldung nur in einem Fall ausgesendet wird, in dem eine Beeinträchtigung des Fahrers mit großer Wahrscheinlichkeit vorliegt. So kann beispielsweise vorgesehen sein, dass der Schwellenwert im Bereich der Intensität eines üblichen Fernlichts liegt, insbesondere aber höher ist als die Intensität des Abblendlichtes, um falsche Meldungen über Blendungen zu verhindern. Als ein zusätzlicher oder alternativer Schwellenwert kann für das Blendkriterium vorzugsweise die Dauer der Lichtintensität verwendet. Dazu ist es notwendig, dass die Lichtintensität mehrfach nacheinander, beispielsweise im Dauerstrichbetrieb, gemessen wird. Hierdurch wird erreicht, dass ein kurzes Blenden, beispielsweise durch Bodenwellen oder durch eine kurze Betätigung des Fernlichts, die nicht zu einer dauerhaften Blendung mit beeinträchtigender Wirkung führt, unberücksichtigt bleibt.
Allerdings ist nicht jede Blendung auch vermeidbar. So tritt eine Blendung des Gegenverkehrs beispielsweise zwangsläufig auf, wenn sich die Fahrzeuge in einem hügeligen Gebiet und dort auf der Kuppe eines Hügels oder einer Erhebung begegnen. Somit entstehen gerade bei Talfahrten bzw. Bergfahrten vermehrt nicht vermeidbare Blendungen. Ferner treten nicht vermeidbare Blendungen in kurvenreichen Gebieten auf, insbesondere dann, wenn sich das Fahrzeug auf der innen liegenden Bahn am Scheitelpunkt der Kurve befindet und das Fahrzeug auf der Außenbahn gerade in die Kurve einfährt. Ebenso kann es in verkehrsberuhigten Zonen durch so genannte Bremsschwellen, also bauliche Erhebungen auf einer Straße, zu einer Blendung des Gegenverkehrs kommen. Da beim Auffahren auf eine Bremsschwelle das Heck des Fahrzeuges tiefer als die Front liegt, wird der Lichtkegel des Lichtes nach oben, also weg von der Fahrbahn abgelenkt. Diese Situation hat einen ähnlichen Effekt wie eine erhöhte Beladung.

Daher wird es gemäß der Erfindung vorgesehen, das Blendkriterium in Abhängigkeit von der Fahrzeugumgebung zu ermitteln. Dazu wird die Fahrzeugumgebung, insbesondere das Höhen- und Kurvenprofil durch einen Umgebungssensor, einen Positionssensor und/oder einen Fahrdynamiksensor des ersten Fahrzeugs ermittelt. Hierzu kann vorgesehen sein, dass über ein satellitenbasiertes Ortungssystem die Positionsinformation des ersten Fahrzeugs gewonnen wird, vorzugsweise in einem mit Kartenmaterial kompatiblen Koordinatensystem. Im Anschluss werden anhand von geographischen und/oder topographischen Kartendaten und der gewonnen Positionsdaten des Fahrzeuges eine Informationen über das das Fahrzeug umgebende Gelände und über das Profil der Straße ermittelt, auf dem sich das Fahrzeug fortbewegt. Dies kann bei der Einstellung bzw. Parametrierung des Blendkriteriums berücksichtigt werden.

Um die Fahrzeugumgebung zu berücksichtigen, kann auch ein Fahrdynamiksensor vorgesehen werden, der beispielsweise ein für ein hügeliges oder kurvenreiches Gebiet typisches Beschleunigungs- oder Lenkmuster liefert. Durch die Überwachung der Umgebung durch fahrzeugeigene Sensoren wie Radar, Lidar oder Kameras sind ebenfalls Höhenzüge oder Kurven erkennbar. Von diesen Sensoren sind die Umgebungssensoren am vorteilhaftesten, die aktiv die Umgebung abtasten, da insbesondere bei Dunkelheit Sensoren, die auf Umgebungslicht angewiesen, möglicherweise nicht empfindlich genug sind.

Somit ist es möglich, Fahrzeugpositionen in der Umgebung zu ermitteln, an denen eine nicht vermeidbare Blendung vermehrt auftreten kann. Dies wird auch als Umgebungsprofil der Fahrzeugumgebung bezeichnet. Die Verknüpfung der Schwellenwerte für Intensität und Zeitdauer der Blendung mit dem Umgebungsprofil liefert daher eine erhöhte Wahrscheinlichkeit dafür, dass eine Warnmeldung nur dann ausgesandt wird, wenn tatsächlich eine behebbare Blendung vorliegt. Dies erhöht somit den Konfidenz--Level ("Confidence-Level") der Blend-Detektion.

In Weiterentwicklung dieses Gedankens kann vorgesehen sein, dass die Fahrzeugumgebung klassifiziert wird und das Blendkriterium abhängig von der Klasse der Fahrzeugumgebung ausgewählt wird. So kann beispielsweise vorgesehen werden, dass die als Blendkriterium verwendeten Schwellenwerte für die Lichtintensität oder für die Dauer der vorgegebenen Lichtintensität in einer Tabelle in Abhängigkeit von der Klasse der Fahrzeugumgebung aufgeführt sind. Ebenso kann vorgesehen sein, die Schwellenwerte als Funktion der Klassen der Fahrzeugumgebungen zu berechnen, beispielsweise mittels einer geeigneten Parametrierung. Auch sind andere geeignete Verknüpfungen von Klassen der Fahrzeugumgebung und der Lichtintensität möglich, beispielsweise durch Fuzzy-Logic. Hierdurch ist es beispielsweise möglich, die Schwellenwerte im ländlichen Verkehr anders gewichtet als im städtischen Verkehr in das Blendkriterium einfließen zu lassen oder zwischen einer starken und einer schwachen Blendung zu unterscheiden.

Hierdurch wird erreicht, dass für jede Fahrzeugumgebung das optimale Blendkriterium verwendet werden kann. Demnach wird das Blendkriterium der Umgebungssituation angepasst. Eine Warnmeldung wird daher in Situationen, in denen die Wahrscheinlichkeit für eine Blendung größer ist, bereits bei geringeren Schwellenwerten abgesetzt.

In einer bevorzugten Ausführungsform kann die Warnmeldung an das zweite Fahrzeug mittels gerichteten Kurzstreckenfunks und/oder eine Fahrzeug-zu-Umgebung-Kommunikation übermittelt werden. Hierdurch ist eine kostengünstige und schnelle Informationsübermittlung möglich. Kurzstreckenfunk lässt sich kostengünstig in Fahrzeugen installieren, auch wenn diese über keine geeignete Kommunikationsmöglichkeit verfügen. Die meisten Kraftfahrzeuge besitzen aber für die Funk-Zentralverriegelung über geeignete Sender und Empfänger, die auch für das Aussenden und den Empfang der erfindungsgemäßen Warnmeldungen bei Empfang genutzt werden können. Hierzu ist meist nur eine geeignete Einrichtung der Steuergeräte mittels Software notwendig. In Zukunft werden auch mehr und mehr Fahrzeuge mit einer Fahrzeug-zu-Umgebung-Kommunikation ausgestattet sein, die auch die erfindungsgemäßen Warnmeldungen genutzt werden können.

Die Informationsübermittlung erfolgt vorzugsweise direkt zwischen den beteiligten Fahrzeugen ohne Zwischenschaltung einer externen Vermittlungsstation. Dadurch wird gewährleistet, dass die Kommunikation bzw. der Informationsaustausch unabhängig von der Verfügbarkeit einer Vermittlungsstation ist.

In Weiterentwicklung dieses Gedankens ist es vorgesehen, dass die Warnmeldung in dem zweiten Fahrzeug durch eine optische und/oder akustische Information an den Fahrer des zweiten Fahrzeugs ausgegeben wird. Dies ermöglicht es dem Fahrer, sein Fernlicht oder seine andere Leuchteinrichtung entsprechend anzupassen bzw. einzustellen.

Aufbauend auf dieser Idee ist es weiter vorteilhalft, wenn die Art der optischen und/oder akustischen Informationen davon abhängt, ob in dem zweiten Fahrzeug Fernlicht eingeschaltet ist oder nicht. Die Anpassung der Warnmeldung an diesen Umstand erfolgt in der Fahrzeugelektronik (Steuergerät) des zweiten Fahrzeugs, da diese eindeutige Information darüber hat, ob das Fernlicht eingeschaltet ist. Die Warnmeldung des ersten Fahrzeuges erstreckt sich demnach lediglich darauf, dass eine Blendung vorliegt. Die Feststellung der Ursachen für die Blendung findet in dem zweiten Fahrzeug statt. So wird der Fahrer des zweiten Fahrzeuges spezifisch über die möglichen Ursachen der Blendung informiert, wodurch er die Warnmeldung schnell erfassen und daher die Blendung auch schnell beheben kann. Gleichzeitig wird damit erreicht, dass er durch die sehr spezifische Warnmeldung möglichst wenig vom Verkehrsgeschehen abgelenkt wird.

Zusätzlich betrifft die Erfindung eine Vorrichtung zum Feststellen einer Blendung eines Fahrers eines ersten Fahrzeuges, die durch eine fehlerhaft eingestellte Leuchteinrichtung eines zweiten Fahrzeugs versursacht wird, mit einem optischen Sensor zum Messen der Lichtintensität, mit einer Übertragungseinrichtung zum drahtlosen Übertragen von Informationen und mit einer Steuereinrichtung, die insbesondere einen Mikroprozessor als Recheneinheit aufweist. Es ist vorgesehen, dass die Steuereinrichtung zur Durchführung des vorbeschriebenen Verfahrens oder Teilen hiervon eingerichtet ist.

In einer bevorzugten Ausführungsform ist der optische Sensor im Rückspiegel des ersten Fahrzeuges angeordnet und zwar derart, dass er das Licht der Leuchteinrichtungen sowohl des entgegenkommenden Verkehres als auch des ihm hinterherfahrenden Verkehres detektieren kann. Das bedeutet, dass der aktive Bereich des Sensors derart ausgerichtet ist, dass der von der aktiven Fläche des Sensors einsehbare Raumwinkel einen merklichen Bereich des Bereichs vor und auch hinter dem ersten Fahrzeug einsehen kann. Vorzugsweise ist dieser Bereich frei einsehbar, also ohne dass die Sichtverbindung durch bauliche Maßnahmen verstellt ist. Zusätzlich ist es vorteilhaft, wenn der Sensor in der Nähe des Gesichtsfeldes des Fahrers angeordnet ist. Nur so kann erreicht werden, dass das von dem Lichtsensor detektierte Licht mit großer Wahrscheinlichkeit auch in das Gesichtsfeld des Fahrers eintritt und somit eine Blendung verursachen kann.

Ferner kann vorteilhafter Weise vorgesehen sein, dass die Vorrichtung einen Sensor zur Ermittlung der Fahrzeugumgebung aufweist. Bei einem derartigen Sensor kann es sich um einen Positionssensor handeln, der beispielsweise auf einem Satellitenortungssystem basiert, oder um einen Umgebungssensor, der aktiv die Umgebung des Fahrzeugs abtastet, beispielsweise um einen Radarsensor, Lidarsensor oder Kamerasensor. Hierdurch kann das Fahrzeug autonom, also ohne beispielsweise auf Karten- und Positionsdaten, angewiesen zu sein, Höhenzüge und/oder Kurven erkennen.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschrieben und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen:
- Fig. 1: schematisch eine erfindungsgemäße Vorrichtung zum Feststellen einer Blendung;
- Fig. 2: schematisch einen Verfahrensablauf des erfindungsgemäßen Verfahrens gemäß einer ersten Ausführungsform und
- Fig. 3: schematisch einen Verfahrensablauf des erfindungsgemäßen Verfahrens gemäß einer ersten Ausführungsform mit Klassifizierung der Umgebung.

Die erfindungsgemäße Vorrichtung zum Feststellen einer Blendung weist eine Steuereinrichtung 1, eine lichtempfindliche Leuchtdiode als optischen Lichtsensor 2 und eine Antenne 3 als Teil einer Kommunikationseinrichtung auf. Zusätzlich ist die Steuereinrichtung 1 mit Umgebungssensoren 4, mit weiteren fahrzeuginternen Sensoren 5 und mit einer Tabelle oder Datenbank 6 verbunden. Bei den Umgebungssensoren 4 handelt es sich um eine Kamera, einen Radarsensor, einen Lidarsensor, ein Satelliten-Ortungssystem (GPS), Kartenmaterial und einen Fahrzeug-zu-Umgebungssensor (C2X), der Informationen über die Umgebung aus einer Fahrzeug-zu-Umgebungs-Kommunikation gewinnen kann. Die erfindungsgemäße Steuereinrichtung weist vorzugweise Anschlüsse zum Anschließen aller, einiger oder auch nur eines der vorgenannnten Sensoren auf. In der Praxis werden meist nicht alle der Sensoren in der Vorrichtung tatsächlich vorhanden und aktiv sein. Ferner kann die Steuereinrichtung 1 auf die Daten einer Tabelle oder Datenbank 6 zugreifen, in denen Blendkriterien enthalten sind.

Die erfindungsgemäße Vorrichtung ist in einem ersten Fahrzeug angeordnet, in dem die Blendung des Fahrers festgestellt werden soll. Dazu ist der optische Lichtsensor 2 so angeordnet, dass der Raumwinkel, der von dem aktiven Bereich des optischen Lichtsensors 2 erfasst wird, sowohl den entgegenkommenden Verkehr als auch den hinterherfahrenden Verkehr detektieren kann. Bevorzugt ist der optische Lichtsensor 2 in dem Rückspiegel des Fahrzeugs angeordnet. Hierdurch hat der aktive Bereich des Lichtsensors 2 Sichtverbindung zu dem für eine Blendung relevanten Umgebungsverkehr, d. h. sowohl entgegenkommende als auch hinter dem ersten Fahrzeug herfahrende zweite Fahrzeuge. Gleichzeitig wird so sichergestellt, dass der optische Lichtsensor 2 möglichst nah im Bereich des Gesichtsfelds des Fahrers des ersten Fahrzeugs angeordnet ist. Dadurch erfasst der Lichtsensor einen vergleichbaren Raumwinkel in Vorwärtsrichtung und in Rückwärtsrichtung wie der Fahrer des ersten Fahrzeuges. Die Anordnung im Rückspiegel ist auch vorteilhaft, da das Licht von einem hinterherfahrenden zweiten Fahrzeug, das den Fahrer blenden kann, über den Rückspiegel in das Gesichtsfeld des Fahrers reflektiert wird.

Die Antenne 3 erlaubt ein gegebenenfalls sogar gerichtetes Senden der Warnmeldung mit Kurzstreckenfunk. Im Fall eines gerichteten Sendens kann der Emissionskegel der Antenne in Richtung des Gegenverkehrs und in Richtung des hinterherfahrenden Verkehrs weisen, wobei die verschiedenen Emissionsrichtungen gegebenenfalls auch beim Senden selektiv ausgewählt werden können, um Fehlinformationen an andere Fahrzeugs zu vermeiden. Die Reichweite sollte ungefähr der Sichtweite des Fahrers des ersten Fahrzeuges entsprechen, was gegebenenfalls auch durch eine Einstellung der Sendeleitung an die jeweilige Sichtweite des Fahrers angepasst werden kann.

Die jeweils vorhandenen Umgebungssensoren 4 sind so mit der Vorrichtung verbunden, dass die Steuereinrichtung die für die jeweilige Situation optimalen Umgebungssensoren 4 auswählen kann. Es ist auch vorgesehen, dass die Steuereinrichtung die vorhandenen Umgebungssensoren 4 parallel zueinander verwenden kann.

Bei dem erfindungsgemäßen Verfahren wird die Lichtintensität kontinuierlich oder quasi kontinuierlich als Messsignal durch einen optischen Lichtsensor erfasst und gespeichert. Im Anschluss wird die gespeicherte Lichtintensität mit einem Blendkriterium verglichen und in Abhängigkeit von diesem Ergebnis wird entschieden, ob eine Warnmeldung ausgesandt wird. Der optische Lichtsensor 2 ist als eine Photodiode (Leuchtdiode) ausgebildet. Die Speicherung des Messsignals der Lichtintensität erfolgt als eine Zeitreihe mit mindestens einem Eintrag, d. h., dass mindestens ein Messsignal zur Überprüfung mit dem Blendkriterium gespeichert ist. Je nach Speicherkapazität ist es aber sinnvoll, auch mehr als ein Messsignal, beispielsweise im Sinne eines FIFO-Speichers (First-In-First-Out), zwischenzuspeichern. So ist es möglich, die auf den Lichtsensor eintreffende Intensität über einen Zeitraum zu analysieren. So kann die Dauer der Lichteinwirkung festgestellt werden, die in einem Blendkriterium auch berücksichtigt werden kann.

Das zur Feststellung einer potentiellen Blendung notwendige Blendkriterium ist vordefiniert. Es besteht vorzugsweise aus mindestens zwei Werten. Der eine Wert beschreibt die Amplitude der Lichtintensität und der andere Wert beschreibt die zeitliche Dauer der Lichtintensität.

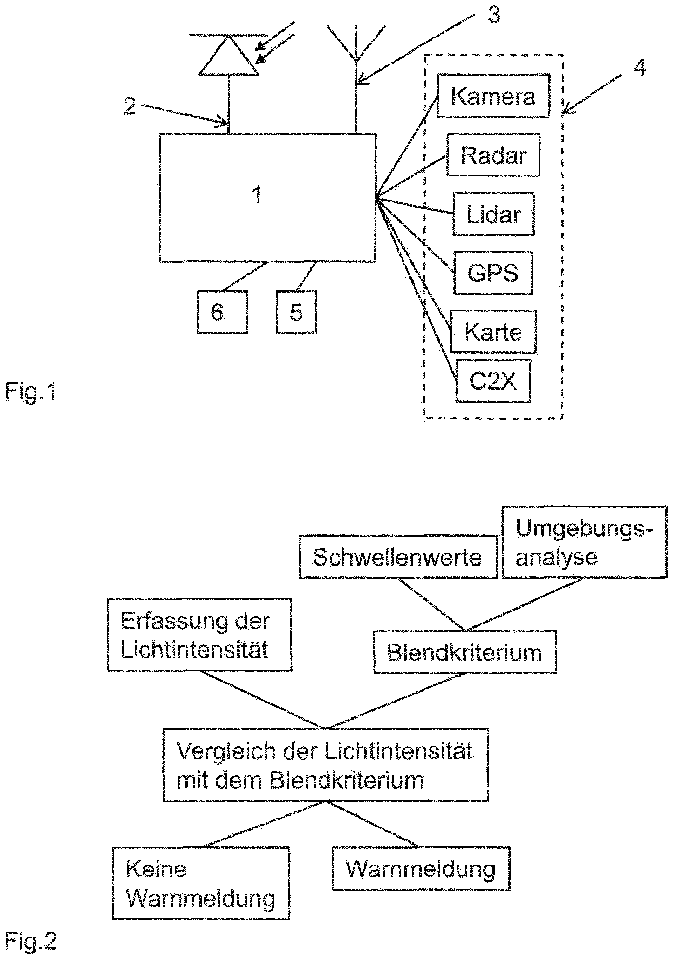

Im nächsten Schritt werden, wie in Fig. 2 dargestellt, diese Blendkriterien als Schwellenwerte herangezogen und mit der Lichtintensität verglichen. Liegt sowohl die Amplitude der Lichtintensität als auch die zeitliche Ausdehnung oberhalb der durch das Blendkriterium vorgegebenen Schwellenwerte, so liegt eine potentielle Blendung vor. Durch das Vorliegen von zwei Schwellenwerten in dem Blendkriterium wird erreicht, dass eine kurze Blendung durch das Fernlicht eines zweiten Fahrzeuges, wie es beispielsweise bei Bodenwellen auftreten kann, unberücksichtigt bleibt. Liegen die erfassten Werte unterhalb von einem Schwellenwerte, so wird keine Warnmeldung ausgesandt.

In einer deutlich verbesserten und bevorzugten Ausführungsform wird neben der zuvor beschriebenen Erfassung des Messignals eine Umgebungsanalyse durchgeführt. Dies führt zu einer wesentlichen Erhöhung der Detektionsgenauigkeit.

Bei der Umgebungsanalyse wird über die Umgebungssensoren 4, die mit der Steuereinrichtung 1 verbunden sind, die Umgebung in Bezug auf die geografischen Gegebenheiten analysiert. Bei der Umgebungsanalyse werden strahlbasierte Sensoren wie Radar und Lidar sowie bildbasierte Sensoren wie eine Kamera ebenso wie Fahrzeug-zu-Umgebung-Sensoren verwendet. Ferner wird auf Kartenmaterial und ein Satellitenortungssystem zurückgegriffen.

Je nach Situation werden optimale Umgebungssensor 4 ausgewählt, sofern diese in dem ersten Fahrzeug zur Verfügung stehen.

So ist eine Kamera, die auf Umgebungslicht angewiesen ist, bei Dunkelheit ungeeignet bzw. zu unempfindlich. In diesem Fall sind strahlbasierte Systeme besser. Ebenso können nachrichtenbasierte Systeme, wie die Fahrzeug-zu-Umgebung-Kommunikation, herangezogen werden . Hierdurch ist im Allgemeinen jedoch nur eine indirekte Information über den Umgebungsverlauf möglich. Ferner die Position des Fahrzeugs über einen satellitenbasierten Ortungssensor ermittelt und diese Position in die geographische und topographische Karte eingetragen und so die Fahrzeugumgebung ermittelt werden. Sofern sich das Fahrzeug auf einer Talfahrt oder auf einer Bergfahrt oder in einer Kurve befindet, wird die Blendung als nicht vermeidbar klassifiziert.

Durch die Umgebungsanalyse wird also geprüft, ob die detektierte Blendung aufgrund der geographischen Gegebenheiten oder des Kurvenverlaufes nicht vermeidbar ist.

Ergibt die Überprüfung der erfassten Lichtintensität mit dem Blendkriterium, dass die Blendung vermeidbar ist, wird eine Warnmeldung an das zweite Fahrzeug ausgegeben. Diese Warnmeldung wird über gerichteten Kurzstreckenfunk an das zweite Fahrzeug übertragen. Dem Fahrer des zweiten Fahrzeuges wird durch das zweite Fahrzeug diese Warnmeldung akustisch und/oder optisch mitgeteilt.

In Abhängigkeit davon, ob das Fernlicht aktiviert ist, hat die Meldung zwei Ausprägungen. Die Fahrzeugelektronik ermittelt selbstständig, ob das Fernlicht aktiviert ist oder nicht. Ebenso wählt diese die entsprechende Meldung aus. Falls das Fernlicht eingeschaltet ist, lautet die Warnmeldung beispielsweise: "Sie blenden den Gegenverkehr - Bitte blenden Sie ab". In einer Situation, in der das Fernlicht nicht eingeschaltet ist, lautet die dem Fahrer mitgeteilte Meldung beispielsweise: "Ihre Beleuchtungsanlage ist nicht richtig eingestellt. Bitte suchen Sie die nächste Service-Station auf".

In einer weiteren Ausführungsform besteht der optische Lichtsensor 2 aus zwei aktiven Detektionsbereichen. So ist es möglich, den ungefähren Ursprung der Blendung herauszufinden. Sofern die zwei aktiven Detektionsbereiche entsprechend ausgerichtet sind, kann ermittelt werden, ob die Blendung vom Gegenverkehr oder vom nach folgenden Verkehr herrührt. Dazu erfasst der eine aktive Bereich den entgegenkommenden und der andere den hinterherfahrenden Verkehr. In diesem Fall kann die Warnmeldung entweder in Fahrtrichtung oder entgegengesetzt zur Fahrtrichtung ausgesandt werden.

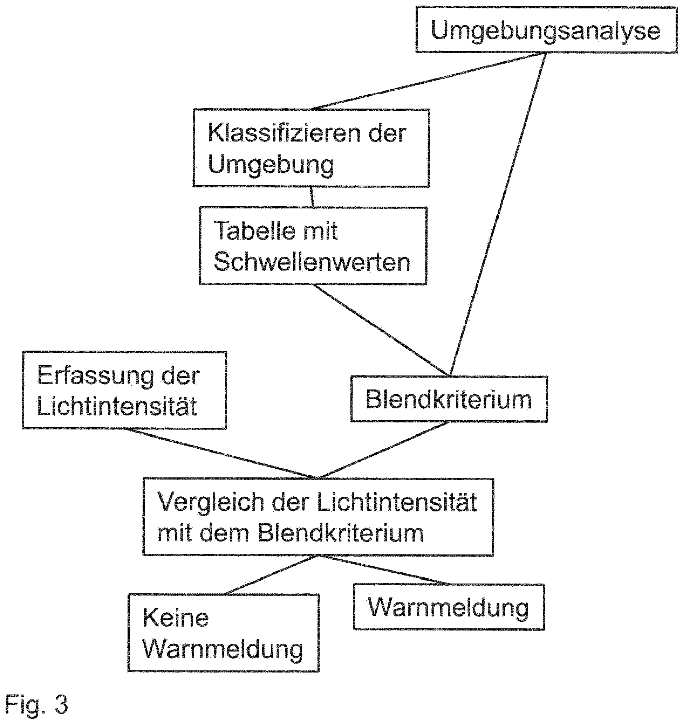

In einer weiteren Ausführungsform wird die Umgebung im Anschluss an die Umgebungsanalyse klassifiziert, wie in Fig. 3 dargestellt. Die Klassifizierung richtet sich danach, wie groß die Wahrscheinlichkeit für eine nicht behebbare Blendung ist. Es werden beispielsweise drei Klassen gebildet. Die erste Klasse umfasst den städtischen Verkehr, die zweite den außerstädtischen Verkehr ohne Hügel oder Kurven und in der letzten Klasse werden alle anderen Situationen berücksichtigt. Anhand der so erstellten Klassen wird das entsprechende Blendkriterium aus einer Tabelle ausgewählt. Die Werte in der Tabelle sind fest, aber veränderbar vorgegeben. Für die Klassen variiert der Schwellenwert, der angibt, wie lange eine Blendung erfasst werden muss, damit von einer potentiell vermeidbaren Blendung ausgegangen werden kann. Insbesondere wird bei Vorliegen einer vermeidbaren Blendung eine Warnmeldung ausgesandt.

Durch das erfindungsgemäße Verfahren und die entsprechend eingerichtete Vorrichtung zur Blenddetektion wird eine Blendung sicher detektiert. Dabei basiert die Detektion nicht nur auf optischen Eingangssignalen, sondern auch auf den geographischen Gegebenheiten der Fahrstrecke, auf der sich das Fahrzeug bewegt.

## Patentansprüche

1. Verfahren zum Feststellen einer Blendung des Fahrers eines ersten Fahrzeuges, die durch eine fehlerhaft eingestellte Leuchteinrichtung eines zweiten Fahrzeuges verursacht wird, wobei das Vorliegen einer Blendung durch einen optischen Lichtsensor (2) festgestellt wird, wobei bei einer festgestellten Blendung eine Warnmeldung an das zweite Fahrzeug gesendet wird, wenn ein vorgegebenes Blendkriterium erfüllt ist und wobei als Blendkriterium mindestens ein Schwellenwert für Lichtintensität und/oder für die Dauer der vorgegebenen Lichtintensität vorgegeben wird, **dadurch gekennzeichnet dass** das Blendkriterium abhängig von der Fahrzeugumgebung ermittelt wird, wobei die Fahrzeugumgebung durch einen Umgebungssensor (4) und/oder einen Fahrdynamiksensor (5) des ersten Fahrzeugs ermittelt wird.

2. Verfahren nach Anspruch 1, **dadurch gekennzeichnet, dass** die Fahrzeugumgebung klassifiziert wird und das Blendkriterium abhängig von der Klasse der Fahrzeugumgebung ausgewählt wird.

3. Verfahren nach einem der vorhergehenden Ansprüche, **dadurch gekennzeichnet, dass** die Warnmeldung an das zweite Fahrzeug mittels gerichtetem Kurzstreckenfunk und/oder einer Fahrzeug-zu-Umgebung-Kommunikation übermittelt wird.

4. Verfahren nach einem der vorhergehenden Ansprüche, **dadurch gekennzeichnet, dass** die Warnmeldung in dem zweiten Fahrzeug durch eine optische und/oder akustische Information an den Fahrer des zweiten Fahrzeugs ausgegeben wird.

5. Verfahren nach Anspruch 4, **dadurch gekennzeichnet, dass** Art der optischen und/oder akustischen Information davon abhängt, ob in dem zweiten Fahrzeug Fernlicht eingeschaltet ist oder nicht.

6. Vorrichtung zum Feststellen einer Blendung des Fahrers eines ersten Fahrzeuges, die durch eine fehlerhaft eingestellte Leuchteinrichtung eines zweiten Fahrzeuges verursacht wird, mit einem optischen Lichtsensor (2) zum Messen der Lichtintensität, mit einer Übertragungseinrichtung zum drahtlosen Übertragen von Informationen und mit einer Steuereinrichtung (1), **dadurch gekennzeichnet, dass** die Steuereinrichtung (1) zur Durchführung des Verfahrens nach einem der Ansprüche 1 bis 5 eingerichtet ist.

7. Vorrichtung nach Anspruch 6, **dadurch gekennzeichnet, dass** der optische Lichtsensor (2) im Rückspiegel des ersten Fahrzeuges angeordnet ist.

8. Vorrichtung nach Anspruch 6 oder 7, **dadurch gekennzeichnet, dass** die Vorrichtung einen Umgebungssensor (4) zur Ermittlung der Fahrzeugumgebung aufweist.

## Claims

1. Method for detecting dazzling of the driver of a first vehicle that is caused by an erroneously adjusted lighting device of a second vehicle, wherein the presence of dazzling is detected by an optical light sensor (2), wherein detected dazzling prompts a warning to be sent to the second vehicle if a prescribed dazzle criterion is satisfied and wherein the dazzle criterion prescribed is at least one threshold value for light intensity and/or for the duration of the prescribed light intensity,
**characterized in that** the dazzle criterion is ascertained on the basis of the vehicle surroundings, the vehicle surroundings being ascertained by an ambient sensor (4) and/or a driving dynamics sensor (5) of the first vehicle.

2. Method according to Claim 1,
**characterized in that** the vehicle surroundings are classified and the dazzle criterion is selected on the basis of the class of the vehicle surroundings.

3. Method according to either of the preceding claims,
**characterized in that** the warning is transmitted to the second vehicle by means of directional short-range radio and/or a vehicle-to-surroundings communication.

4. Method according to one of the preceding claims,
**characterized in that** the warning is output in the second vehicle by means of a piece of visual and/or audible information to the driver of the second vehicle.

5. Method according to Claim 4,
**characterized in that** the type of the visual and/or audible information is dependent on whether or not full beam is switched on in the second vehicle.

6. Apparatus for detecting dazzling of the driver of a first vehicle that is caused by an erroneously adjusted lighting device of a second vehicle, having an optical light sensor (2) for measuring the light intensity, having a transmission device for wirelessly transmitting information and having a control device (1), **characterized in that** the control device (1) is set up to perform the method according to one of Claims 1 to 5.

7. Apparatus according to Claim 6, **characterized in that** the optical light sensor (2) is arranged in the rear-view mirror of the first vehicle.

8. Apparatus according to Claim 6 or 7, **characterized in that** the apparatus has an ambient sensor (4) for ascertaining the vehicle surroundings.

## Revendications

1. Procédé destiné à la constatation d'un éblouissement du conducteur d'un premier véhicule, provoqué par le mauvais réglage du mécanisme d'éclairage d'un deuxième véhicule, dans lequel l'état d'éblouissement est constaté par un capteur de lumière optique (2), dans lequel, dans le cas d'un éblouissement effectivement constaté, un message d'alerte est envoyé au deuxième véhicule, quand un critère d'éblouissement prédéfini est rempli, et dans lequel au moins une valeur de seuil est prédéfinie comme critère d'éblouissement pour l'intensité lumineuse et/ou pour la durée de l'intensité lumineuse prédéfinie, **caractérisé en ce que** le critère d'éblouissement est déterminé en fonction de l'environnement du véhicule, dans lequel l'environnement du véhicule est déterminé par un capteur d'environnement (4) et/ou par un capteur de dynamique de conduite (5) du premier véhicule.

2. Procédé selon la revendication 1, **caractérisé en ce que** l'environnement du véhicule est soumis à une classification et le critère d'éblouissement est sélectionné en fonction de la catégorie de l'environnement du véhicule.

3. Procédé selon l'une des revendications précédentes, **caractérisé en ce que** le message d'alerte est transmis au deuxième véhicule au moyen d'un signal radio ciblé à courte portée et/ou d'une communication de type « véhicule à environnement ».

4. Procédé selon l'une des revendications précédentes, **caractérisé en ce que** le message d'alerte dans le deuxième véhicule est émis au conducteur du deuxième véhicule par l'intermédiaire d'une information optique et/ou acoustique.

5. Procédé selon la revendication 4, **caractérisé en ce que** la nature de l'information optique et/ou acoustique dépend du fait que les feux de route soient allumés ou non dans le deuxième véhicule.

6. Dispositif destiné à la constatation d'un éblouissement du conducteur d'un premier véhicule, provoqué par le mauvais réglage du mécanisme d'éclairage d'un deuxième véhicule, lequel dispositif comprend un capteur de lumière optique (2) destiné à la mesure de l'intensité lumineuse, un mécanisme de transmission destiné à la transmission sans fil d'informations, ainsi qu'un mécanisme de commande (1), **caractérisé en ce que** le mécanisme de commande (1) est configuré en vue de la réalisation du procédé selon l'une des revendications 1 à 5.

7. Dispositif selon la revendication 6, **caractérisé en ce que** le capteur de lumière optique (2) est disposé dans le rétroviseur du premier véhicule.

8. Dispositif selon la revendication 6 ou 7, **caractérisé en ce que** ledit dispositif présente un capteur d'environnement (4) destiné à la détermination de l'environnement du véhicule.
